# FASCICULE DE BREVET EUROPEEN

(11) **EP 1 996 831 B1**
(45) Date de publication et mention de la délivrance du brevet: **16.01.2013**
(21) Numéro de dépôt: 07731068.8
(22) Date de dépôt: 01.03.2007
(51) Int. Cl.: F16G 5/06, F16G 5/20

(54) **COURROIE DE TRANSMISSION DE PUISSANCE ET SON PROCÉDÉ DE FABRICATION**
TREIBRIEMEN UND VERFAHREN ZU SEINER HERSTELLUNG
POWER TRANSMISSION BELT AND METHOD FOR PRODUCING SAID POWER TRANSMISSION BELT

(30) Priorité: 03.03.2006 FR 0601923
(43) Date de publication de la demande: 03.12.2008
(73) Titulaire: Hutchinson, 75008 Paris (FR)
(72) Inventeur: DIEUDONNE, Marie, F-45230 St Maurice sur Aveyron (FR); SONNTAG, Philippe, F-77850 Hericy (FR); VARIN, Hervé, F-37300 Joue-les-Tours (FR)
(74) Mandataire: Jacquard, Philippe Jean-Luc
(86) Numéro de dépôt international: PCT/FR2007/000368
(87) Numéro de publication internationale: WO 2007/099233

(56) Documents cités:
- EP-A- 1 696 150
- WO-A-93/18315
- WO-A1-02/084144
- WO-A1-2004/011822
- FR-A- 2 210 251
- GB-A- 917 277
- US-A- 3 964 328
- US-A- 4 392 842
- US-A1- 2004 214 675
- US-B1- 6 770 004

## Description

La présente invention concerne une courroie de transmission de puissance, à savoir une courroie en V ou à nervures en forme de V, notamment de type K pour des applications automobiles, et un procédé de fabrication de la courroie.

Les nervures de telles courroies, qui sont composées de caoutchouc vulcanisé ont des faces en contact direct avec la poulie de vilebrequin et avec les poulies des accessoires entraînés.

Les moteurs à combustion interne présentent un phénomène d'acyclisme qui est d'autant plus important que le taux de compression est élevé (notamment dans les moteurs Diesel) et que le nombre de cylindres est réduit. Cet acyclisme impose des contraintes mécaniques importantes aux courroies.

Certains accessoires, par exemple un alternateur en charge présentent des inerties élevées, ce qui génère des niveaux de couples dynamiques d'autant plus importants que l'acyclisme est élevé. Ces variations du niveau de couple se traduisent à leur tour par des écarts de tension de la courroie qui sont importants, voire très importants.

Lorsque le niveau de tension de la courroie est trop bas, elle peut présenter un glissement instantané suffisamment important pour empêcher l'entraînement et générer du bruit.

La courroie doit donc présenter un coefficient de frottement suffisant pour éviter ce phénomène.

Par contre, si le coefficient de frottement de la courroie est trop élevé, on peut observer un phénomène d'accrochage important dans la poulie réceptrice, puis un décrochage brusque générateur de bruit ("stick-slip").

Une troisième cause possible de bruyance est le désalignement relatif de deux poulies, qui génère également un phénomène d'accrochage-décrochage ("stick-slip") générateur de bruit d'autant plus important que le coefficient de frottement est important. Ce phénomène dépend également de la longueur de brin, des dimensions de la courroie, et de la nature des matériaux qui la composent.

Pour remédier aux deux premières causes (coefficient de frottement trop bas ou trop élevé) il est connu de diminuer les variations de tension par l'ajout de dispositifs tels qu'un filtre sur le vilebrequin (AVT), ou bien d'une roue libre ou d'une poulie découpleuse sur l'alternateur.

On peut également augmenter le niveau moyen de tension de la courroie, mais cette solution ne remédie que partiellement au problème.

Enfin, ces solutions ne permettent pas du tout de remédier à un désalignement très important, et de résoudre le phénomène de bruit qui lui est lié.

Il est donc souhaitable de trouver une solution satisfaisante pour contrôler l'adhérence entre les courroies et les poulies et qui éventuellement évite l'adjonction de dispositifs auxiliaires tels qu'un filtre sur le vilebrequin, ou bien une roue libre ou une poulie découpleuse sur l'alternateur.

Il a été proposé dans la Demande de Brevet Français FR 2 210 251 de limiter le bruit de contact en déposant sur la denture d'une courroie un film de polyéthylène à poids moléculaire ultra élevé ou bien encore en déposant un film de polyéthylène seulement sur le haut de la denture (Demande PCT WO 2004/011822) pour éviter une insuffisance de transmission de puissance à cause d'un coefficient de frottement trop faible.

Dans l'un et l'autre cas, les contraintes de cisaillement et de flexion/contreflexion sont subies par le film continu, ce qui entraîne une dégradation par craquelure et fissure du film et donc une longévité insuffisante du revêtement.

Par ailleurs, il a été proposé d'intégrer à la denture des matériaux sous forme de charges par exemple du graphite dans le cas des Brevets US 4 024 773, US 4 031 768 ou bien encore US 4 892 510.

L'intégration de ces charges est obtenu sans lien suffisant avec le polymère de la denture, ce qui fait que lors d'un contact avec glissement, il y a arrachement d'éléments de charge et discontinuité du frottement caoutchouc/charge. L'arrachage de ces charges facilite les amorces de fissure et fragilise localement l'élastomère.

La Demande PCT WO 93/18315 propose une courroie formée essentiellement de matériau thermoplastique dont la denture est recouverte de tissu.

La Demande US 2004/0214675 propose une courroie dont la denture est recouverte de tissu, lui-même recouvert d'un élastomère à haute teneur en éthylène tel que l'EPDM, matériau qui n'est pas satisfaisant pour contrôler l'adhérence entre la courroie et les poulies.

Ainsi, les dépôts en surface proposés ne possèdent pas une adhérence suffisamment forte pour garantir un coefficient de frottement suffisamment stable pendant la durée de vie de la courroie. A cause de l'abrasion, le coefficient de frottement augmente progressivement, d'où apparition progressive d'un phénomène de bruyance.

La présente invention a pour objet de proposer une courroie dont les performances sont améliorées en ce qui concerne le phénomène de bruyance.

L'invention concerne ainsi une courroie nervurée de transmission de puissance présentant une denture en élastomère à base d'éthylène alpha oléfine, notamment l'EPDM ou l'EPM, caractérisée en ce qu'au moins les flancs de la denture sont au moins en partie revêtus d'un film en une matière thermoplastique au moins en partie réticulée et contenant au moins 30% d'au moins un polyéthylène basse densité, par exemple 30% et 90% de polyéthylène basse densité, notamment entre 50% et 90% de polyéthylène basse densité et plus particulièrement entre 80% et 90% de polyéthylène basse densité.

Le polyéthylène basse densité a une masse moléculaire entre 50 000 g/mole et 200 000 g/mole, plus particulièrement entre 50 000 g/mole et 150 000 g/mole et de préférence entre 50 000 g/mole et 100 000 g/mole. En particulier, le film peut comporter un mélange de polyoléfines au moins en partie réticulé, ou bien encore un copolymère à base de polyéthylène, notamment un copolymère éthyléneoctène-polyéthylène.

Le film présente une épaisseur qui est par exemple comprise entre 10 µ et 500 µ, et plus particulièrement entre 50 µ et 200 µ.

Le film peut comporter une charge de particules de noir de carbone, ce qui permet de lui conférer une conductivité suffisante pour éviter l'accumulation de charges électrostatiques.

Le film peut avantageusement comporter des particules et/ou des fibres de graphite, de bisulfure de molybdène et/ou contenant du fluor (notamment PTFE et/ou FEP et/ou PFA et/ou PVDF), ce qui permet d'augmenter les propriétés de glissement.

Au moins certaines particules et/ou fibres sont en viscose et/ou en polyamide, plus particulièrement en fibres aramides, et/ou en polyester et/ou en polyimide, et/ou en polysulfone, et/ou en polyéthersulfone, et/ou en polyéther imide, et/ou en polyoxyméthylène, et/ou en une polyéthercétone (PEK, PEKK, PEEK, etc...)et/ou en fibres acryliques.

La granulométrie des particules ou la longueur L des fibres peut être comprise entre 15 µ et 200 µ, notamment entre 30 µ et 100 µ, et plus particulièrement entre 30 µ et 90 µ. Le rapport d'aspect L/d entre la longueur et le diamètre des fibres est compris entre 1 et 100, et notamment entre 1 et 50.

L'invention concerne également un procédé de fabrication d'une courroie telle que définie ci-dessus, caractérisé en ce qu'il met en oeuvre l'application d'un film en matière thermoplastique tel que défini ci-dessus, à l'état non réticulé ou au moins en partie réticulé (par exemple avec un taux de réticulation de 20% ou plus), sur une surface de gomme de denture.

Cette application s'effectue avantageusement avant formation de la denture par Moulage dans un hydromoule et vulcanisation de la courroie. Au cours de la vulcanisation de la courroie (autour de 180°C), il se produit un changement de structure du film qui aboutit en particulier dans un premier cas, à une réticulation partielle du film non réticulé dans un second cas, et à une augmentation du taux de réticulation du film partiellement réticulé, à condition cependant que le film soit réticulable au cours de la vulcanisation, qui s'effectue par exemple au peroxyde.

En particulier, une co-réticulation est susceptible de se produire entre le film et l'élastomère de la denture de la courroie (EPDM ou EPM notamment), avec entre autres pour avantage une très bonne adhésion du film sur la denture de la courroie.

L'invention sera mieux comprise à la lecture de la description en liaison avec les dessins dans lesquels :
- la figure 1 illustre une courroie automobile de type K selon l'invention.
- les figures 2a et 2b représentent des essais de traction respectivement dans le sens d'extrusion dit "sens machine" (figure 2a) et dans le sens travers perpendiculaire au sens d'extrusion (figure 2b) pour trois films thermoplastiques à base de polyéthylène, respectivement en polyéthylène à très haute masse moléculaire (UHMW-courbe I), film à base de polyéthylène basse densité (courbe II) et fil en polyéthylène de densité moyenne (courbe III).
- et les figures 3a et 3b illustrent le procédé selon l'invention.

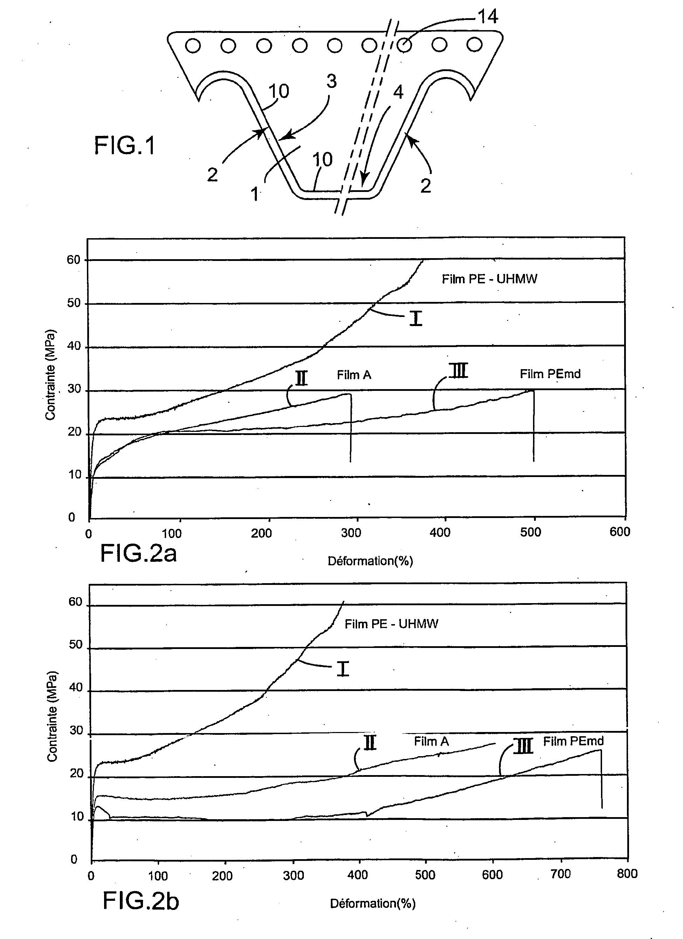

La figure 1 illustre une courroie présentant une ou plusieurs dents 1 qui sont par exemple en un élastomère de la famille des éthylènes alpha oléfines, par exemple en EPDM ou en EPM ayant des flancs 3 et un sommet 4. Le repère 10 désigne le surface des dents 1.

Selon la présente invention, on prévoit au moins sur la surface 10 des flancs 3 des dents 1, un revêtement constitué par un film 2 en une matière thermoplastique au moins en partie réticulée, comportant au moins 30% de polyéthylène basse densité ayant une masse moléculaire comprise entre 50 000 et 200 000 g/mole, et plus particulièrement entre 50 000 et 150 000 g/mole, et de préférence entre 50 000 et 100 000 g/mole.

Selon un exemple de procédé de fabrication, un film de matière thermoplastique non réticulée ou bien au moins en partie réticulée est posé sur la face externe de la feuille à l'état cru constituant la gomme de dent de l'ébauche. Il est préférable que le film ne soit pas entièrement réticulé pour bénéficier de l'amélioration de l'adhésion qui est due à l'affinité chimique entre le film et la gomme de dent lors de la réticulation.

L'ensemble est placé dans un hydromoule pour réaliser l'empreinte des dents et la vulcanisation de la courroie. Après vulcanisation, le film est partiellement ou totalement réticulé, et notamment il présente un taux de réticulation entre 50% et 100%, qui est supérieur à celui du film posé sur la feuille crue 11 de gomme de dent.

Après démoulage, on découpe l'ébauche pour former les courroies individuelles. On constate une adhésion remarquable entre la feuille de la matière thermoplastique au moins en partie réticulée et la gomme de dents vulcanisée.

Le film de matière thermoplastique au moins en partie réticulé est en particulier un polyoléfine ou un mélange de polyoléfines qui est au moins en partie réticulé. Le degré de réticulation permet de contrôler les propriétés mécaniques du film et notamment d'éviter que son module d'Young (qui caractérise sa raideur) ne soit trop élevé, mais aussi sa tenue en température et sa tenue à l'abrasion.

Il est avantageux que le film soit un mélange de polyoléfines qui contient du polyéthylène basse densité, par exemple entre 50% et 90% dudit polyéthylène et plus particulièrement entre 80% et 90% dudit polyéthylène.

Le polyéthylène co-réticule avec l'EPDM ou l'EPM grâce à la présence de peroxyde ou autre agent de réticulation, ainsi qu'éventuellement la matrice du film, ce qui crée une solidarisation avec l'éthylène alpha oléfine qui constitue la denture de la courroie et favorise l'adhérence du film à l'élastomère de la denture. D'autre part, la bonne compatibilité du polyéthylène avec la séquence éthylène contenue dans l'élastomère de la denture (par exemple EPDM) améliore l'adhérence des deux couches.

On choisit du polyéthylène basse densité (jusqu'à environ 0,94 g/cm³), ce qui permet de se rapprocher des propriétés mécaniques de la gomme constituant les dents de la courroie.

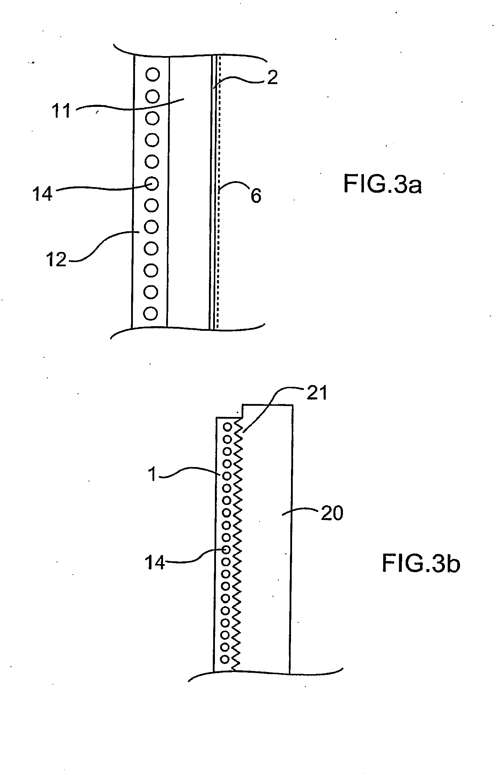

Le film 2 lorsqu'il est posé sur la feuille crue 11 de gomme de dents solidaire de la feuille 12 de gomme de dos qui présente un câblé de renforcement 14 enroulé hélicoïdalement (figure 3a), présente une épaisseur par exemple entre 10 µ et 500 µ, et plus particulièrement entre 50 µ et 200 µ.

Après passage dans un hydromoule 20 présentant une denture 21, et formation des dents 1 avec vulcanisation au peroxyde de la courroie, le film réticule partiellement ou totalement et il subit un étirement moyen de l'ordre de 100%, ce qui fait que son épaisseur se situe entre 5 µ et 250 µ, et plus particulièrement entre 25 µ et 100 µ. Un film de 100 µ donne un revêtement des dents dont l'épaisseur est environ 50 µ sur la courroie finie.

Comme le montrent les figures 2a et 2b, le film à base de polyéthylène basse densité (courbe II) ne présente pas de seuil d'écoulement dans le sens machine. La présence d'un seuil d'écoulement se traduit par une région de pente négative après le coude de la courbe. Il présente un seuil d'écoulement dans le sens perpendiculaire au sens machine, mais ce seuil est moins prononcé que pour les deux autres films.

Or, au cours de l'étape de vulcanisation de la courroie, les propriétés du film sont modifiées, ce qui conduit à la diminution, voire à la suppression d'un seuil d'écoulement et à une diminution de la valeur du module du film (qui devient plus souple). On voit donc l'intérêt du procédé utilisant un film à base de polyéthylène basse densité : supprimer le seuil d'écoulement dans le sens travers où précisément le film subit un allongement de 100% lors de la formation de dents dans l'hydromoule.

La présence de ce film qui revêt les dents de la courroie vulcanisée permet de réduire le phénomène de bruit et de conserver cet avantage dans le temps, car un tel film au moins en partie réticulé (de préférence entre 50% et 100%), présente une très bonne résistance à l'usure par abrasion.

Il est possible d'ajouter au film thermoplastique au moins en partie réticulé un additif tel que le noir de carbone sous forme de poudre, ce qui permet de conférer à la surface de la courroie une conductivité suffisante pour éviter les phénomènes d'accumulation de charges électrostatiques.

Le coefficient de glissement de la courroie peut être également amélioré en incorporant au film des particules et/ou des fibres de graphite, de bisulfure de molybdène et/ou des particules ou des fibres ("fluorofibres") contenant du fluor tels que du PTFE (polytétrafluoréthylène), et/ou FEP (éthylène, propylène fluoré) et/ou PVDF (fluorure de polyvinylidène) et/ou PFA (perfluoroalkoxy), ce qui est favorable à la diminution du bruit.

Il est particulièrement avantageux d'incorporer au film des particules et/ou des fibres en polyester et/ou en polyimide et/ou en polyamide, de préférence des fibres aramides, et/ou bien encore en viscose, et/ou en polysulfone (PSU), et/ou en polyéthersulfone (PES), et/ou en polyether imide (PEI), et/ou en polyoxyméthylène (POM) et/ou bien encore des fibres acryliques (PAN), et/ou des particules et/ou des fibres de la famille des polyéthercétones. La famille des polyéthercétones comprend notamment le polyétheréthercétone (PEEK), le polyéthercétonecétone (PEKK) et le polyéthercétone (PEK).

L'incorporation des particules et/ou des fibres à l'intérieur du film améliore notablement la résistance à l'usure par rapport à un produit classique flocké, qui présente des fibres exposées directement à l'abrasion.

L'incorporation de particules et/ou de fibres peut être effectuée lors de la fabrication du film. De préférence, elle est obtenue en déposant les particules et/ou les fibres 6 à la surface du film, par exemple par pulvérisation, avant l'étape de vulcanisation dans l'hydromoule 20. Lors de la vulcanisation de la courroie, le film 2 est chauffé et se déforme pour former les dents, et les particules et/ou les fibres 6 s'incorporent dans la masse du film 20, sans dépasser à l'extérieur de la courroie.

Le film thermoplastique au moins en partie réticulé présente en général de bonnes propriétés en présence d'hydrocarbures.

Les résines thermoplastiques réticulables comportent un ou plusieurs polymères tels que des polyoléfines, les polystyrènes, les poiyuréthanes, les polyamides et les polyesters.

Pour une courroie en EPDM ou en EPM, il est particulièrement avantageux d'utiliser un film réticulé en un polyoléfine contenant un homo ou un copolymère comprenant de l'éthylène. Les copolymères d'éthylène comprennent notamment les copolymères éthylène/alpha-oléfine ("EAO"), les copolymères éthylène/ester non saturé, les copolymères éthylène/acrylate/acide acrylique, les copolymères éthylène/acide méthacrylique et les copolymères polyéthylène-éthyléneoctène. On notera que le terme copolymère recouvre les polymères issus de deux types de monomères ou plus, et inclut donc les terpolymères.

Il existe différents procédés de réticulation utilisables pour le film :
1) la réticulation chimique qui met en oeuvre un ou plusieurs agents de réticulation (peroxyde, silane ...), ainsi qu'une exposition à au moins une condition d'activation (chaleur, pression, et/ou radiations).
   La réticulation chimique est par exemple réalisée à l'aide de péroxyde, entre 110°C et 220°C, notamment pour le polyéthylène et le TPE tel que SBS ou SIS, ou bien encore pour le polyéthylène chloré (CM ou CPE), ou le polyéthylène chlorosulfoné (CSM).
   Pour augmenter le degré de réticulation, il est possible d'ajouter au mélange utilisé pour le film des co-agents de réticulation comprenant notamment des groupements acrylate (acrylate difonctionnel DA, acrylate trifonctionnel TA), méthacrylate (méthacrylate difonctionnel DMA, ou trifonctionnel TMA, triméthyol propane triméthacrylate TMPTMA), cyanurate (triallyl isocyanurate TAIC) ou bien encore PB (1,2-vinylpolybutadiene) ou mPDM (N,N'-m-phénylenedimaléimide).
2) la réticulation par radiations (faisceau d'électrons, rayons X, rayons gamma ou beta) pouvant ou non mettre en oeuvre des co-agents de réticulation. Pour les électrons, l'énergie est de préférence au moins égale à 10⁴ eV.

Pour une réticulation par irradiation, on utilise par exemple une dose entre 10 kGray et 300 kGray à une température entre 0°C et 60°C et de préférence à température ambiante (20°C).

Le degré de réticulation peut être déterminé notamment en mesurant le contenu de gel ("gel content") par exemple selon la norme ASTMD 2765-95.

Un autre test pour déterminer le contenu de gel (en %) consiste à dissoudre la fraction non réticulée dans un solvant qui ne dissout pas la fraction réticulée ("gel") de la résine. Le pourcentage obtenu est la fraction de la phase insoluble (réticulée) rapportée à la masse totale de la résine.

Une autre méthode est de déterminer l'indice de fluage ("melt flow index") selon la norme ASTMD 1238-98.

### ESSAIS COMPARATIFS

| Type Essai (Norme) | Conditions | Caractéristique mesurée | courroie EPDM standard flockée | courroie avec film PE UHMW | courroie avec film PE selon l'invention |
|---|---|---|---|---|---|
| Moteur Diesel | moteur 4cyl. diesel, accessoires débitants, ralenti | durée de vie (h) craquelure | | | |
| | | | 800 | 65 | 1200 |
| Tenue chaleur (SAE J2432A) | | | | | |
| | 121°C/20Nm / K6 | durée de vie (h) | 600 | 910 | 920 |
| Qualification bruit (SAE J2432A) | 25°C / 50% HR | Angle (°) d'apparition de la bruyance | | | |
| | | | ±2 | ±4,5 | ±4,5 |

La courroie EPDM avec film PE selon l'invention testée comporte un film plastomère copolymère polyéthylène-éthyléneoctène qui est un mélange de polyéthylène basse densité et de polyéthylène basse densité linéaire.

L'angle mesuré selon SAE J2432A est un angle de désalignement exprimé en °. C'est l'angle qui a pour tangente le rapport entre le désalignement axial a (en mm) entre poulies et la longueur L du brin non désaligné. Angle = Arctg (a/L)

L'essai consiste à appliquer un désalignement axial et d'écouter à partir de quel désalignement la bruyance apparaît. Plus l'anale est grand, meilleur est le résultat.

Exemple : longueur de brin L non désalignée entre deux poulies d'essai : 80 mm ; désalignement axial (a) provoqué pour atteindre l'apparition de la bruyance = 6,3 mm ;
Angle = Arctg (6,3/80) = 4,5°.

## Revendications

1. Courroie nervurée de transmission de puissance, à savoir courroie en V ou à nervures en forme de V, présentant une denture en élastomère à base d'élastomère éthylène alpha oléfine, **caractérisée en ce qu'**au moins les flancs **(3)** de la denture sont revêtus d'un film **(2)** en matière thermoplastique au moins en partie réticulée, comprenant au moins 30% d'au moins un polyéthylène basse densité ayant une masse moléculaire comprise entre 50 000 et 200 000 g/mole.

2. Courroie selon la revendication 1, **caractérisée en ce que** ledit polyéthylène basse densité a une masse moléculaire comprise entre 50 000 et 150 000 g/mole, et de préférence entre 50 000 et 100 000 g/mole.

3. Courroie selon la revendication 1 ou 2, **caractérisée en ce que** le taux de réticulation de la matière thermoplastique est compris entre 50% et 100%

4. Courroie selon une des revendications précédentes, **caractérisée en ce que** ledit film **(2)** comporte entre 30% et 90% dudit polyéthylène basse densité et notamment entre 50% et 90% dudit polyéthylène basse densité.

5. Courroie selon la revendication 4, caractérisé en ce ledit film comporte entre 75% et 90% dudit polyéthylène basse densité.

6. Courroie selon une des revendications précédentes, **caractérisée en ce que** le film **(2)** est constitué par un mélange de polyoléfines contenant dudit polyéthylène basse densité.

7. Courroie selon une des revendications 1 à 5, **caractérisée en ce que** le film **(2)** est constitué par un copolymère à base dudit polyéthylène basse densité, notamment un copolymère éthyléneoctène-polyéthylène.

8. Courroie selon une des revendications précédentes, **caractérisée en ce que** ledit élastomère éthylène alpha oléfine est un EPDM ou un EPM.

9. Courroie selon une des revendications précédentes, **caractérisée en ce que** le film **(2)** présente une épaisseur comprise entre 10 µ et 500 µ, et plus particulièrement entre 50 µ et 200 µ.

10. Courroie selon une des revendications précédentes, **caractérisée en ce que** ledit film **(2)** comporte une charge de particules de noir de carbone.

11. Courroie selon une des revendications précédentes, **caractérisée en ce qu'**elle comporte également des particules et/ou des fibres qui sont noyées dans ledit film **(2)**.

12. Courroie selon une des revendications précédentes, **caractérisée en ce que** les particules ont une granulométrie et/ou les fibres ont une longueur comprise entre 15 µ et 200 µ, notamment entre 30 µ et 100 µ, et plus particulièrement entre 30 µ et 90 µ, les fibres ayant un rapport d'aspect entre 1 et 100.

13. Courroie selon une des revendications 11 ou 12, **caractérisée en ce qu'**au moins certaines particules et/ou fibres sont en graphite et/ou en bisulfure de molybdène et/ou contiennent du fluor et sont notamment en PTFE, et/ou FEP et/ou PFA et/ou PVDF.

14. Courroie selon une des revendications 11 à 13, **caractérisée en ce qu'**au moins certaines particules et/ou fibres sont en viscose et/ou en polyamide, et plus particulièrement en fibres aramides, et/ou en polyester et/ou en polyimide, et/ou en polysulfone, et/ou en polyethersulfone, et/ou en polyether imide, et/ou en polyoxyméthylène, et/ou une polyéthercétone et/ou en fibres acryliques.

15. Procédé de fabrication d'une courroie de transmission de puissance selon une des revendications précédentes, **caractérisé en ce qu'**il met en oeuvre l'application d'un dit film **(2)** en matière thermoplastique à l'état non réticulé ou au moins en partie réticulé sur une surface en gomme de denture, et **en ce que** ladite application est réalisée sur la gomme de denture à l'état cru, avant formation de la denture **(1)** par moulage et vulcanisation de la courroie.

16. Procédé selon une la revendication 15, **caractérisé en ce qu'**au cours de ladite formation de la denture, le film **(2)** subit un allongement dans le sens travers perpendiculaire au sens machine, ce qui fait que son seuil d'écoulement est diminué ou supprimé.

17. Procédé selon une la revendication 16, **caractérisé en ce que** des particules et/ou des fibres sont incorporés au dit film **(2)** à l'état non réticulé ou au moins en partie réticulé.

18. Procédé selon une la revendication 16, **caractérisé en ce que** des particules et/ou des fibres sont déposées à la surface du film **(2)** à l'état non réticulé ou au moins en partie réticulé et s'incorporent à celui-ci au cours de la vulcanisation de la courroie dans l'hydromoule.

19. Procédé selon une la revendication 17, **caractérisé en ce qu'**au moins certaines particules et/ou fibres sont en graphite et/ou en bisulfure de molybdène et/ou contiennent du fluor et sont notamment en PTFE, et/ou FEP et/ ou PVDF.

20. Procédé selon une la revendication 16, **caractérisé en ce qu'**au moins certaines particules et/ou fibres sont en polyester et/ou en polyimide et/ou en polyamide, plus particulièrement en fibres aramides, et/ou en viscose, et/ou en polysulfone, et/ou en polyéthersulfone, et/ou en polyether imide, et/ou en polyoxyméthylène, et/ou une polyéthercétone et/ou en fibres acryliques.

## Claims

1. A ribbed power transmission belt, namely a V-belt or V-ribbed belt, exhibiting a toothing made of elastomer based on ethylene/α-olefin elastomer, **characterized in that** at least the sides (3) of the toothing are coated with a film (2) made of at least partially crosslinked thermoplastic comprising at least 30% of at least one low-density polyethylene having a molecular weight of between 50 000 and 200 000 g/mol.

2. The belt as claimed in claim 1, **characterized in that** said low-density polyethylene has a molecular weight of between 50 000 and 150 000 g/mol and preferably between 50 000 and 100 000 g/mol.

3. The belt as claimed in claim 1 or 2, **characterized in that** the degree of crosslinking of the thermoplastic is between 50% and 100%.

4. The belt as claimed in one of the preceding claims, **characterized in that** said film (2) comprises between 30% and 90% of said low-density polyethylene and in particular between 50% and 90% of said low-density polyethylene.

5. The belt as claimed in claim 4, **characterized in that** said film comprises between 75% and 90% of said low-density polyethylene.

6. The belt as claimed in one of the preceding claims, **characterized in that** the film (2) is composed of a blend of polyolefins comprising said low-density polyethylene.

7. The belt as claimed in one of claims 1 to 5, **characterized in that** the film (2) is composed of a copolymer based on said low-density polyethylene, in particular an ethylene/octene-polyethylene copolymer.

8. The belt as claimed in one of the preceding claims, **characterized in that** said ethylene/α-olefin elastomer is an EPDM or an EPM.

9. The belt as claimed in one of the preceding claims, **characterized in that** the film (2) exhibits a thickness of between 10 µm and 500 µm and more particularly between 50 µm and 200 µm.

10. The belt as claimed in one of the preceding claims, **characterized in that** said film (2) comprises a filler formed of particles of carbon black.

11. The belt as claimed in one of the preceding claims, **characterized in that** it also comprises particles and/or fibers which are embedded in said film (2).

12. The belt as claimed in one of the preceding claims, **characterized in that** the particles have a particle size and/or the fibers have a length of between 15 µm and 200 µm, in particular between 30 µm and 100 µm and more particularly between 30 µm and 90 µm, the fibers having an aspect ratio between 1 and 100.

13. The belt as claimed in either of claims 11 and 12, **characterized in that** at least some particles and/or fibers are made of graphite and/or of molybdenum disulfide and/or comprise fluorine and are in particular made of PTFE and/or FEP and/or PFA and/or PVDF.

14. The belt as claimed in one of claims 11 to 13, **characterized in that** at least some particles and/or fibers are made of viscose and/or of polyamide, and more particularly of aramid fibers, and/or of polyester and/or of polyimide and/or of polysulfone and/or of polyethersulfone and/or of polyetherimide and/or of polyoxymethylene and/or a polyetherketone and/or of acrylic fibers.

15. A process for the manufacture of a power transmission belt as claimed in one of the preceding claims, **characterized in that** it makes use of the application of a said thermoplastic film (2), in the noncrosslinked or at least partially crosslinked state, to a surface made of toothing rubber, and **in that** said application is carried out on the toothing rubber in the raw state, before formation of the toothing (1) by molding in a Hydramold and vulcanization of the belt.

16. The process as claimed in claim 15, **characterized in that** during formation of the toothing, the film (2) is subjected to an elongation in the cross direction perpendicular to the machine direction, so that its yield point is reduced or eliminated.

17. The process as claimed in one claim 16, **characterized in that** particles and/or fibers are incorporated in said film (2) in the noncrosslinked or at least partially crosslinked state.

18. The process as claimed in one claim 16, **characterized in that** particles and/or fibers are deposited at the surface of the film (2) in the noncrosslinked or at least partially crosslinked state and are incorporated in the latter during the vulcanization of the belt in the Hydramold.

19. The process as claimed in one claim 17, **characterized in that** at least some particles and/or fibers are made of graphite and/or of molybdenum disulfide and/or comprise fluorine and are in particular made of PTFE and/or FEP and/or PVDF.

20. The process as claimed in one claim 16, **characterized in that** at least some particles and/or fibers are made of polyester and/or of polyimide and/or of polyamide, more particularly of aramid fibers, and/or of viscose and/or of polysulfone and/or of polyethersulfone and/or of polyetherimide and/or of polyoxymethylene and/or a polyetherketone and/or of acrylic fibers.

## Patentansprüche

1. Gerippter Treibriemen, nämlich Keilriemen oder Keilrippenriemen, welcher eine Zahnung aus Elastomer auf Basis von Ethylen/alpha-Olefin-Elastomer aufweist, **dadurch gekennzeichnet, dass** wenigstens die Flanken (3) der Zahnung mit einem Film (2) aus wenigstens teilweise vernetztem thermoplastischen Material beschichtet sind, das wenigstens 30 % wenigstens eines Polyethylens niedriger Dichte mit einer Molmasse zwischen 50.000 und 200.000 g/mol umfasst.

2. Riemen nach Anspruch 1, **dadurch gekennzeichnet, dass** das Polyethylen niedriger Dichte eine Molmasse zwischen 50.000 und 150.000 g/mol und vorzugsweise zwischen 50.000 und 100.000 g/mol aufweist.

3. Riemen nach Anspruch 1 oder 2, **dadurch gekennzeichnet, dass** der Vernetzungsgrad des thermoplastischen Materials zwischen 50 % und 100 % liegt.

4. Riemen nach einem der vorhergehenden Ansprüche, **dadurch gekennzeichnet**, **dadurch gekennzeichnet, dass** der Film (2) 30 % bis 90 % des Polyethylens niedriger Dichte und insbesondere 50 % bis 90 % des Polyethylens niedriger Dichte umfasst.

5. Riemen nach Anspruch 4, **dadurch gekennzeichnet**, **dadurch gekennzeichnet, dass** der Film 75 % bis 90 % des Polyethylens niedriger Dichte umfasst.

6. Riemen nach einem der vorhergehenden Ansprüche, **dadurch gekennzeichnet, dass** der Film (2) aus einem Gemisch von Polyolefinen besteht, das das Polyethylen niedriger Dichte enthält.

7. Riemen nach einem der Ansprüche 1 bis 5, **dadurch gekennzeichnet, dass** der Film (2) aus einem Copolymeren auf Basis des Polyethylens niedriger Dichte, insbesondere einem Ethylen/Octen-Polyethylencopolymer, besteht.

8. Riemen nach einem der vorhergehenden Ansprüche, **dadurch gekennzeichnet, dass** das Ethylen/alpha-Olefin-Elastomer ein EPDM oder ein EPM ist.

9. Riemen nach einem der vorhergehenden Ansprüche, **dadurch gekennzeichnet, dass** der Film (2) eine Dicke zwischen 10 µ und 500 µ und ganz besonders zwischen 50 µ und 200 µ aufweist.

10. Riemen nach einem der vorhergehenden Ansprüche, **dadurch gekennzeichnet, dass** der Film (2) einen Füllstoff aus Rußpartikeln umfasst.

11. Riemen nach einem der vorhergehenden Ansprüche, **dadurch gekennzeichnet, dass** er weiterhin Partikel und/oder Fasern umfasst, die in den Film (2) eingebettet sind.

12. Riemen nach einem der vorhergehenden Ansprüche, **dadurch gekennzeichnet, dass** die Teilchen eine Teilchengröße und/oder die Fasern eine Länge zwischen 15 µ und 200 µ, insbesondere zwischen 30 µ und 100 µ, und ganz besonders zwischen 30 µ und 90 µ aufweisen, wobei die Fasern ein Querschnittsverhältnis zwischen 1 und 100 haben.

13. Riemen nach einem der Ansprüche 11 oder 12, **dadurch gekennzeichnet, dass** wenigstens einige Teilchen und/oder Fasern aus Graphit und/oder Molybdändisulfid sind und/oder Fluor enthalten, und insbesondere aus PTFE und/oder FEP und/oder PFA und/oder PVDF sind.

14. Riemen nach einem der Ansprüche 11 bis 13, **dadurch gekennzeichnet, dass** wenigstens einige Teilchen und/oder Fasern aus Viskose und/oder Polyamid sind, und ganz besonders aus Aramidfasern, und/oder aus Polyester und/oder Polyimid und/oder Polysulfon und/oder Polyethersulfon und/oder Polyetherimid und/oder Polyoxymethylen und/oder einem Polyetherketon und/oder aus Acrylfasern.

15. Verfahren zur Herstellung eines Treibriemens nach einem der vorhergehenden Ansprüche, **dadurch gekennzeichnet, dass** es das Aufbringen eines Films (2) aus thermoplastischem Material im unvernetzten oder wenigstens teilvernetzten Zustand auf eine Oberfläche aus Zahnungsgummi umfasst, und dadurch, dass das Aufbringen auf den Zahnungsgummi im Rohzustand vor Bildung der Zahnung (1) durch Formen und Vulkanisation des Riemens erfolgt.

16. Verfahren nach Anspruch 15, **dadurch gekennzeichnet, dass** der Film (2) während der Bildung der Zahnung eine Dehnung in Querrichtung senkrecht zur Maschinenrichtung erfährt, was dazu führt, dass seine Streckgrenze verringert oder aufgehoben wird.

17. Verfahren nach Anspruch 16, **dadurch gekennzeichnet, dass** Teilchen und/oder Fasern in den Film (2) im unvernetzten oder wenigstens teilvernetzten Zustand eingearbeitet werden.

18. Verfahren nach Anspruch 16, **dadurch gekennzeichnet, dass** Teilchen und/oder Fasern auf der Oberfläche des Films (2) im unvernetzten oder wenigstens teilvernetzten Zustand abgeschieden werden und sich in diesen während der Vulkanisation des Riemens in der Hydroform einlagern.

19. Verfahren nach Anspruch 17, **dadurch gekennzeichnet, dass** wenigstens einige Teilchen und/oder Fasern aus Graphit und/oder Molybdändisulfid sind und/oder Fluor enthalten, und insbesondere aus PTFE und/oder FEP und/oder PVDF sind.

20. Verfahren nach Anspruch 16, **dadurch gekennzeichnet, dass** wenigstens einige Teilchen und/oder Fasern aus Polyester und/oder Polyimid und/oder Polyamid sind, insbesondere aus Aramidfasern, und/oder aus Viskose und/oder Polysulfon und/oder Polyethersulfon und/oder Polyetherimid und/oder Polyoxymethylen und/oder einem Polyetherketon und/oder aus Acrylfasern.
